# EUROPEAN PATENT SPECIFICATION

(11) **EP 3 543 587 B1**
(45) Date of publication and mention of the grant of the patent: **26.05.2021**
(21) Application number: 19154320.6
(22) Date of filing: 29.01.2019
(51) Int. Cl.: F16M 11/04, F16M 11/08, F16M 11/10, F16M 11/14, F16M 11/20, F16M 11/40, F16M 13/04

(54) **WEARABLE SUPPORT FOR ELECTRONIC DEVICES**
TRAGBARE HALTEVORRICHTUNG FÜR ELEKTRONISHE GERÄTE
SUPPORT PORTABLE POUR LES APPAREILS ELECTRONIQUES

(30) Priority: 19.03.2018 IT 201800003752
(43) Date of publication of application: 25.09.2019
(73) Proprietor: Agrorotica di Brignani Roberto, 25020 Azzano Mella (BS) (IT)
(72) Inventor: BRIGNANI, Roberto, 25020 AZZANO MELLA (BS) (IT)
(74) Representative: PGA S.p.A.

(56) References cited:
- WO-A1-93/15668
- WO-A1-95/34780
- CN-U- 203 549 332
- US-A- 1 460 697

## Description

### Field of the invention

The present invention relates to the field of supports, in particular wearable ones, and in details it relates to a wearable support for electronic devices.

The present invention further relates to a use of the wearable support for the support of electronic devices.

### Background of the invention

The ever more widespread use of portable electronic devices has seen the parallel widespread use of covering elements, commonly known as "cases", for at least partially coating the body of electronic devices to protect them against impacts or markings deriving from use.

More recently, portable electronic devices, in particular tablets and smartphones, are increasingly distinguished by large screens. The evolution and in particular the expansion of the diagonal of their screens has made them particularly suitable instruments to be observed for a long time, for example and without limitation for studying maps, reading electronic books or for viewing video reproductions such as movies.

As a result of the increase of the diagonal of the screens, smartphones, and consequently tablets, also have dimensions and - especially in the case of tablets - weights that are no consistent with prolonged manual utilisation, in particular in suspension.

Hence, a market has developed for support devices for smartphones and tablets, which allow to maintain the latter in a position consistent with viewing without forcing the user to hold them in one's hand.

The Chinese utility model CN203549332U discloses a wearable supporting structure for an electronic device according to the preamble of claim 1.

The Applicant has observed that known supports do not allow an effective adjustment of the user's observation distance, and they are even more limited in the number of positions that they can make the smartphone or tablet assume with respect to a support plane and thus with respect to the user's viewing point. In particular, the Applicant has observed that there are applications in which a user could need repeated observation or a prolonged observation of the screen of the smartphone or of the tablet, in an environment that is not suitable for supporting it or because the user is in motion.

To obtain first of all a support for portable electronic devices that offers flexible positioning with respect to the user, limiting the drawbacks of known supports, the Applicant has conceived the present invention.

### Summary of the invention

To solve the drawbacks of the prior art, according to a first aspect of the invention, a wearable support for wearable devices according to claim 1 is provided.

According to another non-limiting aspect, the adjustable tensioner (104) comprises a manual control element (105) and an elastic element (106), optionally a spring, on which said manual control element (105) acts, wherein said manual control (105) is adapted to cause the adjustable tensioner (104) to switch between the first configuration for use and the second configuration for use.

According to an additional non-limiting aspect, the adjustable tensioner (104) is installed at the support area (101), and the second point (103b) retaining the flexible tie-rod (103) is constrained to the manual control element (105).

According to the present invention, the support area (101) comprises a planar wall that has a first face (101a) and a second face (101b) opposite the first face; the first face being the face on which, in use, the electronic device (200) can be removably constrained; the adjustable tensioner (104) being installed on the second face.

According to an additional non-limiting aspect, the support area (101) comprises at least one first and one second abutment element (107, 108) that are spaced from each other and both rigidly installed on the second face, said first and second abutment element (107, 108) and the elastic element (106) is retained between the first and the second abutment element (107, 108).

According to an additional non-limiting aspect, the elastic element (106) is an axially compressible elastic element and the first and the second abutment elements (107, 108) determine and limit the axial extension of the elastic element (106); in said first configuration for use, the elastic element (106) is in a first axial extension and in said second configuration for use, the elastic element is in a second axial extension.

According to an additional non-limiting aspect, in said first configuration for use, the elastic element (106) is in a first and greater axial extension and in said second configuration for use, the elastic element (106) is in a second and lesser axial extension.

According to an additional non-limiting aspect, the first configuration for use is a stable and/or at-rest configuration for use and the second configuration for use is an unstable configuration for use, determined by the action of the user on the adjustable tensioner (104), optionally on the control element.

According to an additional non-limiting aspect, the elastic element (106) is adjustably compressible towards said second axial extension for action on the control element (105) without interruption.

According to an additional non-limiting aspect, in said first configuration for use, the elastic element (106), in the first axial extension, is in compression between the first and the second abutment element (107, 108) and exerts an extension force against them.

According to an additional non-limiting aspect, the second point (103b) is at the control element (105) and the action on the control element brings about a shifting of the elastic element (106) from the first extension towards the second extension, optionally a compression of the elastic element (106), which causes a release of the tension of the flexible tie-rod (103) and brings the adjustable tensioner (104) unstably into said second configuration for use, said second configuration for use being maintained as long as the force on said control element (105) is maintained.

According to an additional non-limiting aspect, the control element (105) is rotatably constrained to the second face of the support area (101) and it optionally has a connecting rod (105b) and a translational element, connected to the connecting rod (105b) and axially translating with respect to, and introduced into, a hole in the first abutment element (107), and wherein switching between the first configuration for use and the second configuration for use of the adjustable tensioner is obtained by a rotation of the control element (105). According to an additional non-limiting aspect, the switching of the adjustable tensioner (104) of the first configuration for use to the second configuration for use is given by a rotation of the control element (105) relative to the support area (101) with respect to a resting positions whereat the adjustable tensioner (105) is in said first configuration for use.

According to an additional non-limiting aspect, said at least one first spacer element (102a) is a substantially rigid hollow element, that serves as a guide for the flexible tie-rod (103) and the flexible tie-rod (103) slides therein.

According to an additional non-limiting aspect, the flexible tie-rod (103) is fixed at said first point (103a) inside said first spacer element (102a) and/or substantially at one end of the spacer element (102a).

According to an additional non-limiting aspect, the device comprises a second spacer element (102b), a joint (109) connected between the first spacer element (102a) and the second spacer element (102b) to permit movement of the first spacer element with respect to the second spacer element, and wherein the flexible tie-rod (103) is movably retained by or on said second spacer element (102b).

According to an additional non-limiting aspect, said second spacer element (102b) has a first end connected with said first spacer element (102a) and a second end, opposite the first end, connected to the support area (101).

According to an additional non-limiting aspect, said second spacer element (102b) is a substantially rigid, hollow element that constitutes a guide for the flexible tie-rod (103), and the flexible tie-rod (103) slides inside it, and the flexible tie-rod (103) runs, starting from the first point (103a) fixed inside said first spacer element (102a) and/or substantially at one end of the spacer element (102a), first within the first spacer element (102a) and then within said second spacer element (102b) and then reaches the support area (101).

According to an additional non-limiting aspect, said joint (109) is a hollow joint to allow the passage of said flexible tie-rod (103).

According to an additional non-limiting aspect, the support area (101) develops along a plane defined by a first and a second reference axis (X, Y), orthogonal to each other, and it optionally has at the first face retaining walls for said electronic device (200) oriented transversely and preferably at least partially orthogonally with respect to the plane identified by the first and by the second reference axis (X, Y). According to an additional non-limiting aspect, the support comprises a wearable chest element (111) adapted to be worn by the user and adapted to at least partially encircle the neck of the user, said wearable chest element (111) further comprising a resting portion (112) adapted, during use, to rest on the chest of the user; said wearable chest element (111) being connected with said at least one first spacer element (102a) in such a manner that when the adjustable tensioner (104) is in said first configuration for use, the support area (101) is at a predefined distance with respect to the wearable chest element (111) and in particular, rigidly joined thereto.

According to an additional non-limiting aspect, the wearable chest element (111) is such that when the adjustable tensioner (104) is in said first configuration for use, the support area (101) is and/or can be substantially in front of the user, optionally in an area substantially corresponding to that of the sagittal axis. According to an additional non-limiting aspect, the wearable chest element (111) comprises a curved path in the form of a question mark that defines an opening, namely between an end portion (113) and the resting portion (112) thereof, sufficient to allow the neck of a person to pass through it.

According to an additional non-limiting aspect, the wearable chest element (111) is disconnectably connected to said first spacer element (102a).

According to an additional non-limiting aspect, the support area (101) is disconnectable connected to said first spacer element (102a) and/or to said second spacer element (102b) and the flexible tie-rod (103) comprises a first portion and a second portion disconnectable from each other and respectively fastened at one of their ends to the first spacer element (102a) and to the support area (101).

According to an additional non-limiting aspect, the invention relates to the use of the support according to one or more of the preceding aspects with an electronic device, preferably an electronic device comprising a screen or monitor, still more preferably a smartphone or a tablet.

### Description of the figures

Further features and advantages of the present invention are described in the following description part, which refers to a preferred and non-limiting embodiment of the present invention described with the aid of the accompanying figures in which:
- figure 1 shows a perspective view of the support of the invention, observed from the direction of observation that one has when in use;

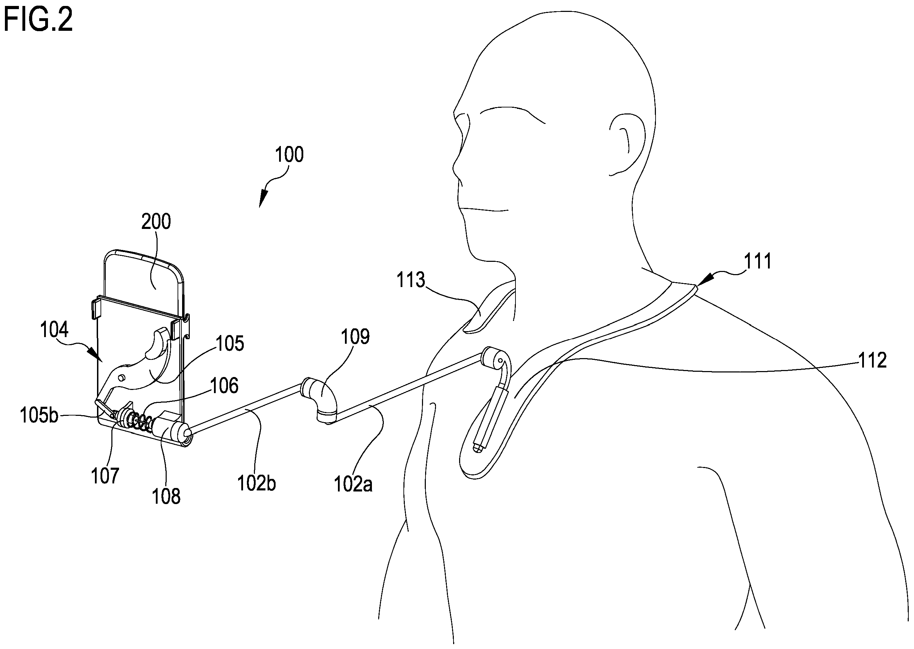

- figure 2 shows an additional perspective view of the support of the invention, in a variant complete with a chest support element, observed from a different angle with respect to the direction of observation of figure 1;
- figure 3 and figure 4 show respective perspective view of the support of the invention.

### Detailed description of the invention

With reference to the accompanying figures, the reference number 100 indicates in its entirety a support for electronic devices, and in particular a wearable support for portable electronic devices.

In particular, the applicant conceived support 100 to be used with portable electronic devices 200 such as smartphones or tablets, so that said support, when worn by the user, allows the latter to have a clear view of the screen of the electronic device, keeping it in a predefined position without the aid of the support of one or two hands, thus being able to have his/her hand free and concurrently to observe the screen 201 itself. Preferably but without limitation, the portable electronic device has substantially flat and planar shape, preferably with rectangular or square perimeter.

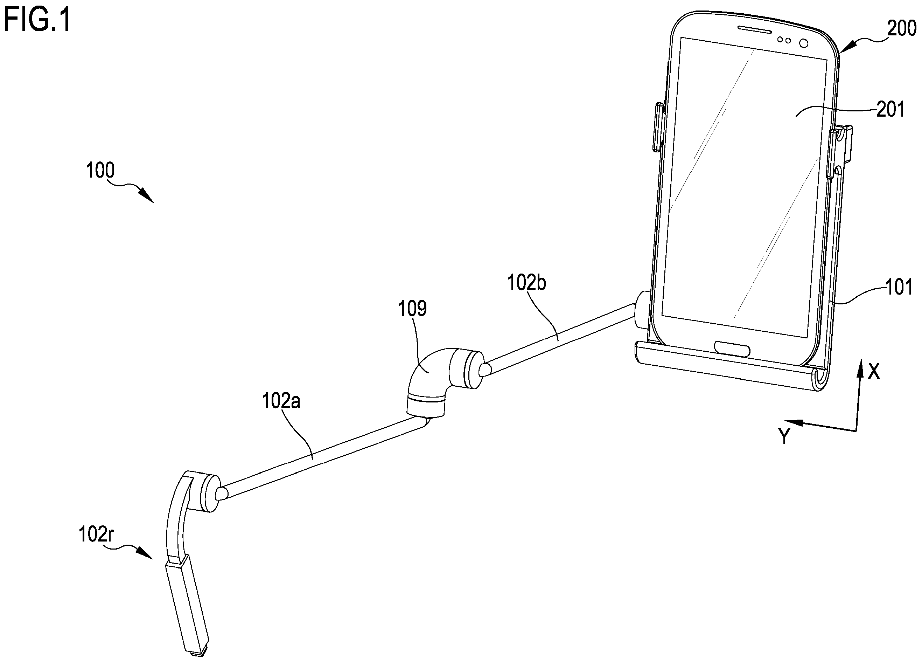

As shown in figure 1, the support first of all comprises a support area 101 whereon, in use, the electronic device 200 is removably fastened. The support area 101 comprises a main wall that preferably but without limitation is substantially planar and develops substantially along a plane comprising a first reference axis and a second reference axis X, Y, orthogonal to each other. This wall defines a first face 101a that is the face whereon the electronic device 200 is removably fastened, and a second face 101b, opposite with respect to the first face 101a.

The support area 101 further comprises retaining walls that extend transversely with respect to the plane identified by the main wall of the support area; in particular, these walls are perimetric, and at least partially orthogonal with respect to the plane X-Y identified by the main wall of the support area. Preferably, but without limitation, the area substantially enclosed by the retaining walls is substantially equal to the area identified by the footprint of the electronic device 200 so that in use, for example and without limitation by contrasted insertion, said electronic device 200 can be removably introduced between them to be fixed. Optionally, albeit preferably, both the first face 101a and the retaining walls can be provided with a rubber coating or with other means able to facilitate the grip with the electronic device 200 to prevent it from slipping.

The support 100 of the present invention further comprises a spacer element 102a movably joined to the support area 101 through an articulated joint 103a and it further comprises a flexible tie-rod 103 that is retained at its first point 103a, preferably but without limitation a first end point, at the first spacer element 102 and at a second point 103b, preferably but without limitation a second end point opposite the first, at the support area 101. Preferably but without limitation, the flexible tie-rod 103 is obtained by means of a steel cable with a cross-section of a few mm, or of static synthetic wire such as polyester or Dyneema ®.

The embodiment illustrated in the accompanying figures is a particular and preferred - albeit non-limiting - embodiment of the support 100 where to the first spacer element 102a is joined a second spacer element 102b that interposed between one end of the first spacer element 102a and the support area 101. Between the first and the second spacer element is present a joint 109 able to allow its relative motion with a movement of mutual rotation with respect to at least one reference axis, and optionally with respect to a reference axis that is rotatable with respect to the first and/or to the second spacer element 102a, 102b.

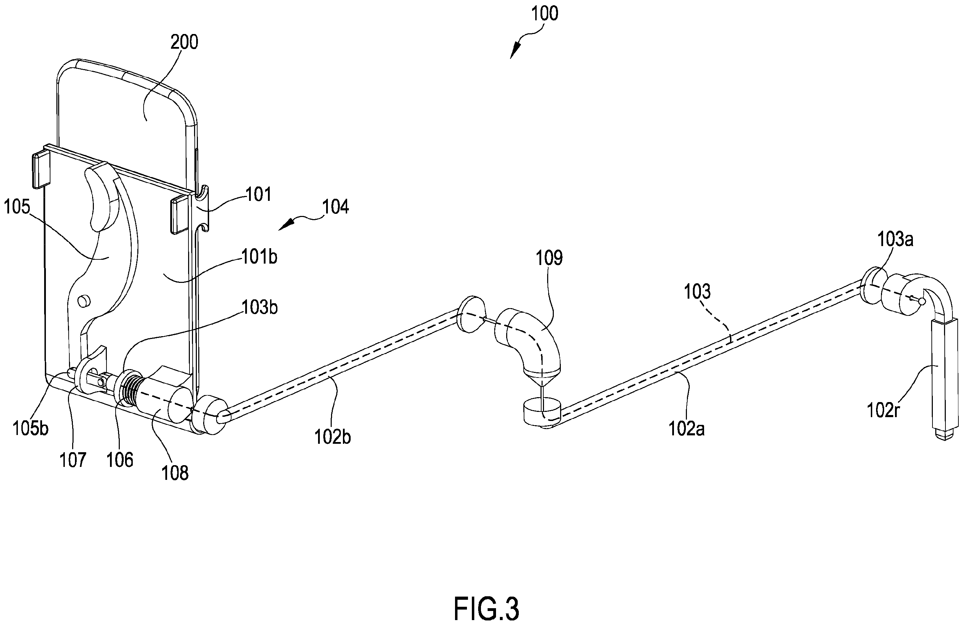

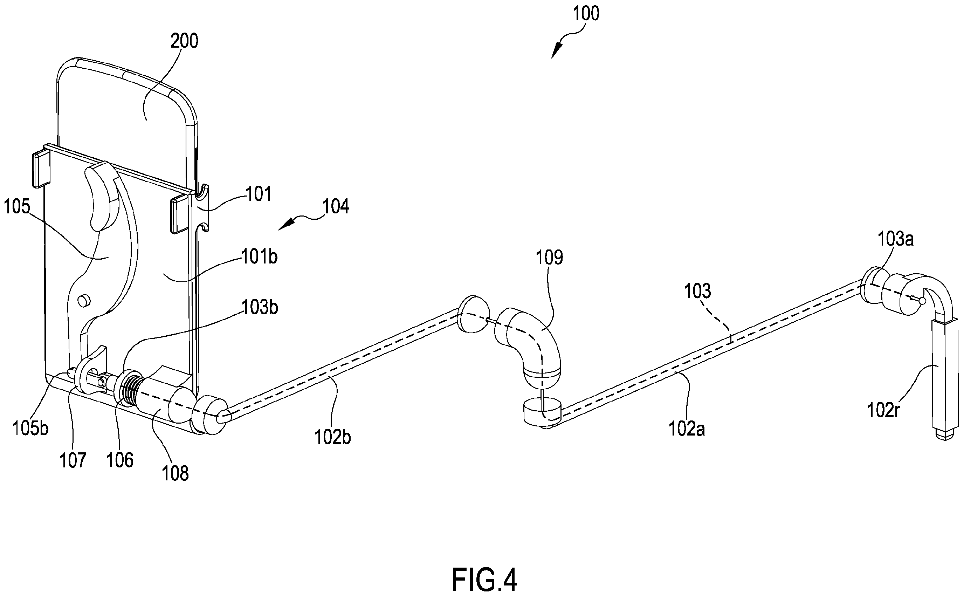

The embodiment illustrated in the accompanying drawings has a joint 109 with angular shape - for example and without limitation identifying a 90° fitting - or a joint 109 with axially fixed head and able to rotate or a joint 109 with head having substantially spheroidal shape, as in the case illustrated in figure 4, or a joint with head having substantially conical shape as in the case illustrated in figure 3, both hollow to allow the passage of the flexible tie-rod 103. In particular, the joint 109 can be configured to rotate relative to its own spacer element, so as to be able advantageously to allow the folding of the first spacer element towards the second spacer element to be able to cause the support area 101 to move closer and/or farther axially with the user's face. Preferably but without limitation, the first and the second spacer element 102 are in the form of substantially rigid bars, optionally hollow, made of light but strong material which can be plastic material and/or aramid or glass fibre or compounds thereof.

In a preferred but non-limiting embodiment, the firs and the second spacer element 102a, 102b are hollow, and the joint 109 is also hollow. The flexible tie-rod 103 runs inside the cavity, resulting in said first point fixed at either an end of the first spacer element 102a or otherwise inside it, and in the second point 103b, at the support area 101, where an adjustable tensioner is present, which will be better described below. Alternatively, the first and the second spacer element 102a, 102b can have guiding eyelets for the flexible tie-rod 103, which in this case could also slide outside and in proximity to each of the spacer elements.

As mentioned, the support 100 also comprises an adjustable tensioner 104, which preferably but without limitation is installed at the second face 101b of the support area 101 so as not to hinder the removable installation of the electronic device 200. The adjustable tensioner is conceived to allow configuring the support between a first configuration of use in which a first and greater pulling force is exerted on the flexible tie-rod 103 that determines the locking of the position assumed by the first and by the second spacer element 102a, 102b with respect to themselves and with respect to the support area and a second configuration of use in which a second and lesser pulling force is exerted on the flexible tie-rod 103 that determines a freedom of mutual motion between the first and the second spacer element 102a, 102b, and between these two and the support area 101. Thanks to this aspect, it is possible to configure the support area on different positions and/or distances relative to the user, assuring full flexibility of use.

The applicant points out that the adjustment of the force necessary to determine the first configuration of use is in particular to be designed in relation to the weight assumed by the electronic device 200 and/or the overall and/or maximum reach which the support area 101 can assume relative to the end of the first support element 102a opposite with respect to the one joined with the second support element. In a preferred and non-limiting embodiment, moreover, the second and lesser pulling force is a zero pulling force, so that the flexible tie-rod 103 can be left totally slack to determine the possibility of mutual positioning between the first spacer element 102a, the second spacer element 102b and the support area 101.

It has also been observed that the joint 109, and more in general every joint that can be present in the support of the invention, can be configured, especially when the flexible tie-rod 103 is tensioned because of the positioning of the adjustable tensioner 104 in the first configuration of use, to cause an increased friction, for example sliding friction, between its semi-portions and/or between itself and the flexible tie-rod 103 to increase the stabilisation of the aforesaid configuration and, equally, also to increase the security of locking of the electronic device 200. For example, and without limitation, the interior of the joint can comprise surfaces with high friction or be configured with notches or recesses adapted to promote retaining the flexible tie-rod in particular when the tensioner is in said first configuration.

The adjustable tensioner 104 comprises a manual command 105 through which it is possible to adjust the force with which the flexible tie-rod is tensioned. Said manual control 105 can thus be a simple linear tensioner for the flexible tie-rod 103 or, as in the case illustrated in the accompanying figures, it can be a manual command 105 rotating with respect to the support area 101, such that the passage from the first to the second operating configuration is determined by the rotation of the manual control 105 between a first and a second position of rotation relative to the support area.

In a preferred and non-limiting embodiment, the manual control 105 rotates on a hinging point that is fixed with respect to the support area 101 and it has an orthogonal axis of rotation with respect to the main wall of the support area 101 and in particular orthogonal with respect to the second face of the support area 101; the manual control thus rotates moving along a plane parallel to the plane identified by the second face 101b of the main wall.

To optimise the operation of the support 100 of the present invention, the Applicant has conceived the presence of an elastic element 106 that is configured to make the first configuration of use a resting configuration, and to let the second configuration of use - repeating the one in which the second force exerted on the flexible tie-rod 103 is not sufficient to determine the relative blockage of the first spacer element 102a, of the second spacer element 120b and of the support element 101 - is only a provisional configuration, which can be held as long as a force is exerted on the manual control 105.

In particular, a first and second abutment element 107, 108 have been conceived, positioned at the second face 101b of the main wall of the support area, projecting therefrom and each provided with a hole positioned so as to be axially aligned with the hole of the opposite abutment element; said first and second abutment element 107, 108 are distanced from each other by a sufficient distance to allow the introduction of the elastic element 106.

In a preferred and non-limiting embodiment of the invention, the elastic element 106 consists of a helical spring, provided with its own elastic constant, which preferably, in resting conditions, has a greater axial extension with respect to the distance that separates the first abutment element 107 from the second abutment element 108; in this way, when it introduce therein, the spring exerts a pushing force against both the first and the second abutment element 107, 108 which if it were not for their fixed installation on the wall, would tend to distance them.

The flexible tie-rod 103 is made to pass through the hole of the first abutment element and of the second abutment element 107, 108, and thus inside the helix of the spring, and the second point 103b fastening the flexible tie-rod is positioned at a pushing plate fixed to one end of the spring and introduced between the first and the second abutment element 107, 108, resulting axially aligned to the spring. A connecting rod element 105b joins a terminal portion of the control element 105 with a movable cylinder that is fixed to the plate and that slides axially relative to the hole of the second abutment element.

In this way, the first configuration of use corresponds to a first, and in particular maximum, axial extension of the spring; the second configuration of use corresponds to a second, and in particular lesser, axial extension of the spring. The latter, naturally tending to extend, pushes the plate against the second abutment element 108 causing the pulling of the flexible tie-rod 103.

In a preferred and non-limiting embodiment, the second abutment element 108 is in the substantial form of an eyelet; the first abutment element 107 can present a containing wall with substantially circular section that identifies an inner wall for containing at least part of the spring. Said wall advantageously contributes to prevent the spring from becoming off-axis with respect to the holes of the first and of the second abutment element, causing, in this avoided case, the system to malfunction.

The action exercised by the user on the manual control 105 can thus be sufficient to cause the rotation thereof, which because of the connecting rod causes the plate to push against the spring which in turn determines a compression thereof and consequently a loosening of the flexible tie-rod 103. For this reason, defining as first position assumed by the manual control 105 the position corresponding to the first configuration of use, every second and different position, rotated with respect to the first position that the manual control can assume, said second position is an unstable position that is a part of the second configuration of use. From this it is inferred that the second configuration of use comprises a plurality of unstable positions, defined without interruption, in which the blocking of the relative position between the first and the second spacer element 102a, 102b together with the support area 101 is not defined.

To assure a correct wearability of the support, a wearable chest element 111 was conceived, which is able to be worn by the user to encircle the neck at least partially, and comprises a body shaped substantially as a question mark which has a resting portion 112, preferably but without limitation with expanded area to assure a sufficient contact area and that identifies a first end opposite to a second end or terminal portion 113, which ends the substantial curve or circular arc identified by the body in order to highlight an opening which has such amplitude as to allow the passage of the user's neck. Preferably but without limitation the wearable chest element 111 is thus rigid or substantially rigid, in any case self-supporting, made of plastic material preferably with soft coating.

Preferably, but without limitation, the end distal end portion of the first spacer element 102a is rigidly but disconnectably joined to the wearable chest element 111 at the resting portion 112 by means of a connecting element or pin 102r, preferably but without limitation identifying a shape curved to 90°. The connecting element or pin 102r is installed so as not to be able to rotate with respect to the resting portion 112.

The applicant has observed in particular that the aspect of the disconnectability of the first spacer element 102a relative to the wearable chest element 111 advantageously allows to obtain a greater flexibility of use: the wearable chest element 111, also because of its rigidity, has considerable dimensions and once it is removed from the remaining part of the device, which because of the joint 109 is foldable, it can make this part much simpler to stow in small spaces at the end of its use.

The applicant lastly observed that it is possible optionally to make the support area 101 so that it is totally disconnectable from the second spacer element 102b, so that the support area can be replaced with one having different, greater or smaller, surface area, for the installation of a different electronic device 200. In this case, advantageously, the flexible tie-rod 103 can be made in two portions, mutually joined with a fitting, for example a bayonet fitting, of a known type and therefore not described herein.

In use, the device of the invention is worn in such a way that the curve highlighted by the body is positioned around the neck of the user in substantially supraclavicular and/or supratrapezius area, and so that the chest resting portion 112 is positioned in substantial correspondence of the sagittal axis of the user.

At this point the user installs the portable electronic device 200 at the first face 101a of the support area 101 so as to block it relative to the perimetric walls.

At this point the user can adjust at will the position and/or the distance assumable by the portable electronic device 200 with respect to his/her face, acting on the control element 105 to rotate it so as to cause a temporary slacking of the flexible tie-rod 103 that allows a relative motion between the support area 101, the first spacer element 102a and the second spacer element 102b.

The advantages of the support of the invention are clear in light of the above description. In particular, it enables the operator to move freely carrying his/her electronic device with him/herself and with his/her own free hands.

Exploiting the motion of the spacer elements, one can have one's own device close to one's trunk or, for example, in a visible position and within reach of one's hands for its operation. In this way, for example, an electronic device can be positioned at a suitable distance both for display, and for utilisation, as well as for its positioning in standby when the device is not in use.

Some examples of the convenience of use can pertain to: users who are waiting for public transportation and keeping their hands free (in their pockets or otherwise); hearing and speech impaired persons who want to communicate with sign language or users who, while they speak, send images captured by means of the electronic device itself, in front of them (for example, to explain and display at the same time); to make videos without holding the selfie stick; to move in an environment (for example historical-touristic locations) and have a video that explains their characteristics; to record the environment in front of them to view it again later (such as a touristic location, an environment, a less, etc.) without having their hands engaged and with the device in fixed position. Essentially, the support of the invention increases the efficiency of the use of mobile devices and amplifies their social and multimedia logic.

Lastly, it is clear that the object of the present invention can be subject to modifications, additions or variants, which are obvious for a person skilled in the art, without thereby departing from the scope of protection that is provided by the claims.

## Claims

1. A wearable support for electronic devices (100), particularly for portable electronic devices, the support (100) comprising:
- A support area (101) adapted to removably retain an electronic device (200) in a fixed position, wherein the support area (101) comprises a planar wall that has a first face (101a) and a second face (101b) opposite the first face, the first face being the face on which, in use, the electronic device (200) is removably constrained;
- At least one first spacer element (102a) that is movably joined to the support area (101);
- At least one flexible tie-rod (103), which is retained between a first point (103a) and a second point (103b), respectively at said at least one first spacer element (102a) and at the support area (101);
- An adjustable tensioner (104) for said at least one flexible tie-rod (103), configured to operate at least between a first configuration for use, in which it exerts a first and greater pulling force on the flexible tie-rod (103), thus locking the position assumed by said at least one first spacer element (102a) with respect to the support area (101), and a second configuration for use, in which it exerts a second and lesser pulling force on the flexible tie-rod (103), thus determining a freedom of movement of said support area (101) with respect to said at least one first spacer element (102a),
**characterised by** the fact that the adjustable tensioner (104) is installed on the second face.

2. The support according to claim 1, wherein the adjustable tensioner (104) comprises a manual control element (105) and an elastic element (106), optionally a spring, on which said manual control element (105) acts, wherein said manual control (105) is adapted to cause the adjustable tensioner (104) to switch between the first configuration for use and the second configuration for use and/or wherein the adjustable tensioner (104) is installed at the support area (101), and the second point (103b) retaining the flexible tie-rod (103) is constrained to the manual control element (105).

3. The support according to claim 1 or claim 2, wherein the support area (101) comprises at least one first and one second abutment element (107, 108) that are spaced from each other and both rigidly installed on the second face, and the elastic element (106) is retained between the first and the second abutment element (107, 108).

4. The support according to claims 2 and 3, wherein the elastic element (106) is an axially compressible elastic element and the first and the second abutment elements (107, 108) determine and limit the axial extension of the elastic element (106); in said first configuration for use, the elastic element (106) is in a first axial extension and in said second configuration for use, the elastic element is in a second axial extension, and wherein in said first configuration for use, the elastic element (106) is in a first and greater axial extension and in said second configuration for use, the elastic element (106) is in a second and lesser axial extension.

5. The support according to one or more of the preceding claims, wherein the first configuration for use is a stable and/or at-rest configuration for use and the second configuration for use is an unstable configuration for use determined by the action of the user on the adjustable tensioner (104) on the control element.

6. The support according to one or more of the preceding claims, wherein the second point (103b) is at the control element (105) and the action on the control element brings about a shifting of the elastic element (106) from the first extension towards the second extension, optionally a compression of the elastic element (106), which causes a release of the tension of the flexible tie-rod (103) and brings the adjustable tensioner (104) unstably into said second configuration for use, said second configuration for use being maintained as long as the force on the control element (105) is maintained.

7. The support according to one or more of the preceding claims, when dependent on claim 4, wherein the control element (105) is rotatably constrained to the second face of the support area (101) and has a connecting rod (105b) and a translational element connected to the connecting rod (105b) and axially translating with respect to, and introduced into, a hole in the first abutment element (107), and wherein switching between the first configuration for use and the second configuration for use of the adjustable tensioner is obtained by a rotation of the control element (105).

8. The support according to one or more of the preceding claims, wherein said at least one first spacer element (102a) is a hollow, substantially rigid element that constitutes a guide for the flexible tie-rod (103), which slides inside it, and the flexible tie-rod (103) is fixed at said first point (103a) inside said first spacer element (102a) and/or substantially at one end of the spacer element (102a).

9. The support according to one or more of the preceding claims, comprising a second spacer element (102b) and a joint (109) connected between the first spacer element (102a) and the second spacer element (102b) to permit movement of the first spacer element with respect to the second spacer element, and wherein the flexible tie-rod (103) is movably retained by or on said second spacer element (102b);
said second spacer element (102b) having a first end connected with said first spacer element (102a) and a second end, opposite the first end, connected to the support area (101);
said second spacer element (102b) being a substantially rigid, hollow element that constitutes a guide for the flexible tie-rod (103), which slides inside it, and the flexible tie-rod (103) runs, from the first point (103a) fixed inside said first spacer element (102a) and/or substantially at one end of the spacer element (102a), first within the first spacer element (102a) and then within said second spacer element (102b) and then reaches the support area (101).

10. The support according to one or more of the preceding claims, further comprising a wearable chest element (111) adapted to be worn by the user and adapted to at least partially encircle the neck of the user, said wearable chest element (111) further comprising a resting portion (112) adapted, during use, to rest on the chest of the user; said wearable chest element (111) being connected with said at least one first spacer element (102a) in such a manner that when the adjustable tensioner (104) is in said first configuration for use, the support area (101) is at a predefined distance with respect to the wearable chest element (111) and in particular, rigidly joined thereto;
wherein the wearable chest element (111) is such that when the adjustable tensioner (104) is in said first configuration for use, the support area (101) is and/or can be substantially in front of the user, optionally in an area substantially corresponding to that of the sagittal axis;
the wearable chest element (111) comprising a curved path in the form of a question mark that defines an opening, namely between an end portion (113) and the resting portion (112) thereof, sufficient to allow the neck of a person to pass through it.

## Patentansprüche

1. Tragbare Halterung für elektronische Vorrichtungen (100), insbesondere für tragbare elektronische Vorrichtungen, wobei die Halterung (100) umfasst:
- einen Halterungsbereich (101), welcher dazu eingerichtet ist, lösbar eine elektronische Vorrichtung (200) in einer festen Position zu halten, wobei der Halterungsbereich (101) eine planare Wand umfasst, welche eine erste Fläche (101a) und eine zweite Fläche (101b) gegenüber der ersten Fläche aufweist, wobei die erste Fläche diejenige Fläche ist, an welcher in Verwendung die elektronische Vorrichtung (200) lösbar gehalten ist;
- wenigstens ein erstes Abstandshalterelement (102a), welches bewegbar mit dem Halterungsbereich (101) verbunden ist;
- wenigstens einen flexiblen Zuganker (103), welcher zwischen einem ersten Punkt (103a) und einem zweiten Punkt (103b) an dem ersten Abstandshalterelement (102a) bzw. an dem Halterungsbereich (101) gehalten ist;
- ein einstellbares Spannelement (104) für den wenigstens einen flexiblen Zuganker (103), welches dazu eingerichtet ist, wenigstens zwischen einer ersten Verwendungskonfiguration, in welcher es eine erste und größere Zugkraft auf den flexiblen Zuganker (103) ausübt, wodurch die von dem wenigstens einen Abstandshalterelement (102a) bezüglich des Halterungsbereichs (101) eingenommene Position festgesetzt wird, und einer zweiten Verwendungskonfiguration zu arbeiten, in welcher es eine zweite und geringere Zugkraft auf den flexiblen Zuganker (103) ausübt, wodurch eine Bewegungsfreiheit des Halterungsbereichs (101) bezüglich des wenigstens einen ersten Abstandshalterelements (102a) bestimmt wird,
**dadurch gekennzeichnet, dass** das einstellbare Spannelement (104) an der zweiten Fläche installiert ist.

2. Halterung nach Anspruch 1, wobei das einstellbare Spannelement (104) ein manuelles Steuerelement (105) und ein elastisches Element (106), optional eine Feder, umfasst, auf welche das manuelle Steuerelement (105) wirkt, wobei die manuelle Steuerung (105) dazu eingerichtet ist, das einstellbare Spannelement (104) dazu zu veranlassen, zwischen der ersten Verwendungskonfiguration und der zweiten Verwendungskonfiguration umzuschalten und/oder wobei das einstellbare Spannelement (104) an dem Halterungsbereich (101) installiert ist und der zweite Punkt (103b), welcher den flexiblen Zuganker (103) hält, an das manuelle Steuerelement (105) festgelegt ist.

3. Halterung nach Anspruch 1 oder Anspruch 2, wobei der Halterungsbereich (101) wenigstens ein erstes und ein zweites Anlageelement (107, 108) umfasst, welche voneinander beabstandet und beide starr an der zweiten Fläche installiert sind, und das elastische Element (106) zwischen dem ersten und dem zweiten Anlageelement (107, 108) gehalten ist.

4. Halterung nach Ansprüchen 2 und 3, wobei das elastische Element (106) ein axial komprimierbares elastisches Element ist und die ersten und zweiten Anlageelemente (107, 108) die axiale Erstreckung des elastischen Elements (106) bestimmen und begrenzen; wobei in der ersten Verwendungskonfiguration das elastische Element (106) in einer ersten axialen Erstreckung ist und in der zweiten Verwendungskonfiguration das elastische Element in einer zweiten axialen Erstreckung ist,
und wobei in der ersten Verwendungskonfiguration das elastische Element (106) in einer ersten und größeren axialen Erstreckung ist und in der zweiten Verwendungskonfiguration das elastische Element (106) in einer zweiten und geringeren axialen Erstreckung ist.

5. Halterung nach einem oder mehreren der vorhergehenden Ansprüche, wobei die erste Verwendungskonfiguration eine stabile und/oder in Ruhe befindliche Verwendungskonfiguration ist und die zweite Verwendungskonfiguration eine instabile Verwendungskonfiguration ist, welche durch die Betätigung des Benutzers an dem einstellbaren Spannelement (104) auf das Steuerelement bestimmt ist.

6. Halterung nach einem oder mehreren der vorhergehenden Ansprüche, wobei der zweite Punkt (103b) an dem Steuerelement (105) ist und die Betätigung an dem Steuerelement eine Verlagerung des elastischen Element (106) von der ersten Erstreckung zu der zweiten Erstreckung herbeiführt, optional eine Kompression des elastischen Elements (106), welche eine Freigabe der Spannung des flexiblen Zugankers (103) hervorruft und das einstellbare Spannelement (104) instabil in die zweiten Verwendungskonfiguration bringt, wobei die zweite Verwendungskonfiguration so lange beibehalten wird, wie die Kraft auf das Steuerelement (105) beibehalten wird.

7. Halterung nach einem oder mehreren der vorhergehenden Ansprüche, wenn abhängig von Anspruch 4, wobei das Steuerelement (105) rotierbar an die zweite Fläche des Halterungsbereichs (101) festgelegt ist und eine Verbindungsstange (105b) sowie ein Verlagerungselement aufweist, welches mit der Verbindungsstange (105b) verbunden ist und sich axial bezüglich eines Lochs in dem ersten Anlageelement (107) verlagert und darin eingesetzt ist, und wobei ein Umschalten zwischen der ersten Verwendungskonfiguration und der zweiten Verwendungskonfiguration des einstellbaren Spannelements durch eine Rotation des Steuerelements (105) erhalten wird.

8. Halterung nach einem oder mehreren der vorhergehenden Ansprüche, wobei das wenigstens eine Abstandshalterelement (102a) ein hohles, im Wesentlichen starres Element ist, welches eine Führung für den flexiblen Zuganker (103) darstellt, welcher darin gleitet, und wobei der flexible Zuganker (103) an einem ersten Punkt (103a) innerhalb des ersten Abstandshalterelements (102a) und/oder im Wesentlichen an einem Ende des Abstandshalterelements (102a) befestigt ist.

9. Halterung nach einem oder mehreren der vorhergehenden Ansprüche, umfassend ein zweites Abstandshalterelement (102b) und ein Gelenk (109), welches zwischen dem ersten Abstandshalterelement (102a) und dem zweiten Abstandshalterelement (102b) verbunden ist, um eine Bewegung des ersten Abstandshalterelements bezüglich des zweiten Abstandshalterelements zu erlauben, und wobei der flexible Zuganker (103) bewegbar von oder an dem zweiten Abstandshalterelement (102b) gehalten ist;
wobei das zweite Abstandshalterelement (102b) ein erstes Ende verbunden mit dem ersten Abstandshalterelement (102a) und ein zweites Ende, gegenüber dem ersten Ende, verbunden mit dem Halterungsbereich (101) aufweist; wobei das zweite Abstandshalterelement (102b) ein im Wesentlichen starres hohles Element ist, welches eine Führung für den flexiblen Zuganker (103) darstellt, welcher darin gleitet, und wobei der flexible Zuganker (103) von dem ersten Punkt (103a), welcher innerhalb des ersten Abstandshalterelements (102a) und/oder im Wesentlichen an einem Ende des Abstandshalterelements (102a) befestigt ist, zuerst innerhalb des ersten Abstandshalterelements (102a) und dann innerhalb des zweiten Abstandshalterelements (102b) verläuft und dann den Halterungsbereich (101) erreicht.

10. Halterung nach einem oder mehreren der vorhergehenden Ansprüche, ferner umfassend ein tragbares Brustelement (111), welches dazu eingerichtet ist, von dem Benutzer getragen zu werden, und dazu eingerichtet ist, wenigstens teilweise den Hals des Benutzers zu umgeben, wobei das tragbare Brustelement (111) ferner einen Ruheabschnitt (112) umfasst, welcher dazu eingerichtet ist, während einer Verwendung an der Brust des Benutzers zu ruhen; wobei das tragbare Brustelement (111) mit dem wenigstens einen ersten Abstandshalterelement (102a) in einer derartigen Weise verbunden ist, dass wenn das einstellbare Spannelement (104) in der ersten Verwendungskonfiguration ist, der Halterungsbereich (101) bei einer vordefinierten Distanz bezüglich des tragbaren Brustelements (111) und insbesondere starr damit verbunden ist;
wobei das tragbare Brustelement (111) derart ist, dass wenn das einstellbare Spannelement (104) in der ersten Verwendungskonfiguration ist, der Halterungsbereich (101) im Wesentlichen vor dem Benutzer ist und/oder sein kann, optional in einem Bereich, welcher im Wesentlichen demjenigen der sagittalen Achse entspricht;
wobei das tragbare Brustelement (111) einen gekrümmten Pfad in der Form eines Fragezeichens umfasst, welcher eine Öffnung definiert, nämlich zwischen einem Endabschnitt (113) und einem Ruheabschnitt (112) davon, ausreichend, um dem Hals einer Person zu erlauben, dahindurch zu treten.

## Revendications

1. Support (100) portable pour dispositifs électroniques, particulièrement pour dispositifs électroniques portables, le support (100) comprenant :
- une zone de support (101) adaptée pour retenir de manière amovible un dispositif électronique (200) dans une position fixe, la zone de support (101) comprenant une paroi plane qui présente une première face (101a) et une seconde face (101b) opposée à la première face, la première face étant la face sur laquelle, durant l'utilisation, le dispositif électronique (200) est contraint de manière amovible ;
- au moins un premier élément espaceur (102a) qui est joint de manière mobile à la zone de support (101) ;
- au moins un tirant souple (103), qui est retenu entre un premier point (103a) et un second point (103b), respectivement au niveau dudit au moins un premier élément espaceur (102a) et au niveau de la zone de support (101) ;
- un dispositif de tension ajustable (104) pour ledit au moins un tirant souple (103), conçu pour fonctionner au moins entre une première configuration pour l'utilisation, dans laquelle il exerce une première et plus grande force de traction sur le tirant souple (103), verrouillant ainsi la position prise par ledit au moins un premier élément espaceur (102a) par rapport à la zone de support (101), et une seconde configuration pour l'utilisation, dans laquelle il exerce une seconde et moins grande force de traction sur le tirant souple (103), déterminant ainsi une liberté de mouvement de ladite zone de support (101) par rapport audit au moins un premier élément espaceur (102a),
**caractérisé par le fait que** le dispositif de tension ajustable (104) est installé sur la seconde face.

2. Support selon la revendication 1, le dispositif de tension ajustable (104) comprenant un élément de commande manuelle (105) et un élément élastique (106), éventuellement un ressort, sur lequel ledit élément de commande manuelle (105) agit, ladite commande manuelle (105) étant adaptée pour amener le dispositif de tension ajustable (104) à commuter entre la première configuration durant l'utilisation et la seconde configuration durant l'utilisation et/ou le dispositif de tension ajustable (104) étant installé au niveau de la zone de support (101), et le second point (103b) retenant le tirant souple (103) étant contraint à l'élément de commande manuelle (105).

3. Support selon la revendication 1 ou la revendication 2, la zone de support (101) comprenant au moins un premier et un second élément de butée (107, 108) qui sont espacés l'un de l'autre et tous les deux installés de manière rigide sur la seconde face, et l'élément élastique (106) étant retenu entre le premier et le second élément de butée (107, 108).

4. Support selon les revendications 2 et 3, l'élément élastique (106) étant un élément élastique axialement compressible et le premier et le second élément de butée (107, 108) déterminant et limitant l'extension axiale de l'élément élastique (106) ; dans ladite première configuration durant l'utilisation, l'élément élastique (106) se trouvant en une première extension axiale et dans ladite seconde configuration durant l'utilisation, l'élément élastique se trouvant dans une seconde extension axiale, et dans ladite première configuration durant l'utilisation, l'élément élastique (106) se présentant en une première et plus grande extension axiale et dans ladite seconde configuration durant l'utilisation, l'élément élastique (106) se trouvant dans une seconde et moins grande extension axiale.

5. Support selon l'une ou plusieurs des revendications précédentes, la première configuration pour l'utilisation étant une configuration stable et/ou au repos pour l'utilisation et la seconde configuration pour l'utilisation étant une configuration instable pour l'utilisation déterminée par l'action de l'utilisateur sur le dispositif de tension ajustable (104) sur l'élément de commande.

6. Support selon l'une ou plusieurs des revendications précédentes, le second point (103b) se situant au niveau de l'élément de commande (105) et l'action sur l'élément de commande amenant un décalage de l'élément élastique (106) depuis la première extension vers la seconde extension, éventuellement une compression de l'élément élastique (106), qui amène un relâchement de la tension du tirant souple (103) et qui amène le dispositif de tension ajustable (104) de manière instable dans ladite seconde configuration durant l'utilisation, ladite seconde configuration pour l'utilisation étant maintenue tant que la force sur l'élément de commande (105) est maintenue.

7. Support selon l'une ou plusieurs des revendications précédentes, lorsqu'elle dépend de la revendication 4, l'élément de commande (105) étant contraint de manière à pouvoir tourner à la seconde face de la zone de support (101) et présentant une tige de liaison (105b) et un élément de translation relié à la tige de liaison (105b) et effectuant axialement une translation par rapport à, et introduit dans, un trou dans le premier élément de butée (107), et la commutation entre la première configuration pour l'utilisation et la seconde configuration pour l'utilisation du dispositif de tension ajustable étant obtenue par une rotation de l'élément de commande (105).

8. Support selon l'une ou plusieurs des revendications précédentes, ledit au moins un premier élément espaceur (102a) étant un élément creux, sensiblement rigide qui constitue un guide pour le tirant souple (103), qui coulisse à l'intérieur, et le tirant souple (103) étant fixé audit premier point (103a) à l'intérieur dudit premier élément espaceur (102a) et/ou sensiblement à une extrémité de l'élément espaceur (102a).

9. Support selon l'une ou plusieurs des revendications précédentes, comprenant un second élément espaceur (102b) et une articulation (109) reliée entre le premier élément espaceur (102a) et le second élément espaceur (102b) pour permettre le mouvement du premier élément espaceur par rapport au second élément espaceur, et le tirant souple (103) étant retenu de manière mobile par ou sur ledit second élément espaceur (102b) ;
ledit second élément espaceur (102b) ayant une première extrémité reliée audit premier élément espaceur (102a) et une seconde extrémité, opposée à la première extrémité, reliée à la zone de support (101) ;
ledit second élément espaceur (102b) étant un élément creux sensiblement rigide, qui constitue un guide pour le tirant souple (103), qui coulisse à l'intérieur, et le tirant souple (103) court, depuis le premier point (103a) fixé à l'intérieur dudit premier élément espaceur (102a) et/ou sensiblement à une extrémité de l'élément espaceur (102a), tout d'abord à l'intérieur du premier élément espaceur (102a) et ensuite à l'intérieur du second élément espaceur (102b) et ensuite atteint la zone de support (101).

10. Support selon l'une ou plusieurs des revendications précédentes, comprenant en outre un élément portable sur la poitrine (111) adapté pour être porté par l'utilisateur et adapté pour encercler au moins partiellement le cou de l'utilisateur, ledit élément portable sur la poitrine (111) comprenant en outre une portion de repos (112) adaptée, durant l'utilisation, pour reposer sur la poitrine de l'utilisateur ; ledit élément portable sur la poitrine (111) étant relié audit au moins un premier élément espaceur (102a) d'une manière telle que lorsque le dispositif de tension ajustable (104) se trouve dans ladite première configuration durant l'utilisation, la zone de support (101) se trouve au niveau d'une distance prédéfinie par rapport à l'élément portable sur la poitrine (111) et en particulier, joint de manière rigide à celle-ci ;
l'élément portable sur la poitrine (111) étant tel que lorsque le dispositif de tension ajustable (104) se trouve dans ladite première configuration pour l'utilisation, la zone de support (101) est, et/ou peut être, sensiblement à l'avant de l'utilisateur, éventuellement dans une zone correspondant sensiblement à celle de l'axe sagittal ;
l'élément portable sur la poitrine (111) comprenant un chemin incurvé sous la forme d'un point d'interrogation qui définit une ouverture, à savoir entre une extrémité finale (113) et la portion de repos (112) de celui-ci, suffisante pour permettre au cou d'une personne de passer à travers elle.
